(19) Europäisches Patentamt
European Patent Office
Office européen des brevets

(11) **EP 2 106 498 B1**

(12) **FASCICULE DE BREVET EUROPEEN**

(45) Date de publication et mention
de la délivrance du brevet:
**22.11.2017 Bulletin 2017/47**

(51) Int Cl.:
*F02D 41/02* (2006.01)   *F01N 3/025* (2006.01)
*F01N 9/00* (2006.01)

(21) Numéro de dépôt: **07858072.7**

(22) Date de dépôt: **21.12.2007**

(86) Numéro de dépôt international:
**PCT/EP2007/064461**

(87) Numéro de publication internationale:
**WO 2008/083917 (17.07.2008 Gazette 2008/29)**

(54) **PROCEDE DE CONTROLE DE LA TEMPERATURE DES GAZ D'ECHAPPEMENT D'UN MOTEUR THERMIQUE**

VERFAHREN ZUR STEUERUNG DER TEMPERATUR VON ABGASEN IN EINEM VERBRENNUNGSMOTOR

METHOD FOR CONTROLLING THE TEMPERATURE OF THE EXHAUST GASES OF A THERMAL ENGINE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.12.2006  FR 0656039**

(43) Date de publication de la demande:
**07.10.2009  Bulletin 2009/41**

(73) Titulaire: **Renault S.A.S.**
**92100 Boulogne-Billancourt (FR)**

(72) Inventeurs:
• **BARRILLON, Pascal**
**F-92130 Issy Les Moulineaux (FR)**
• **POILANE, Emmanuel**
**F-91290 Arpajon (FR)**
• **GAUVIN, Fabrice**
**F-91540 Mennecy (FR)**

(56) Documents cités:
DE-A1- 19 952 830    FR-A- 2 853 006
FR-A1- 2 872 206    US-A1- 2005 247 052

**Description**

L'invention a pour objet un procédé et un dispositif de contrôle de la température des gaz d'échappement d'un moteur thermique, en particulier lors des phases de régénération du système de post-traitement.

Pour réduire la pollution produite par les moteurs à combustion interne il est nécessaire de disposer, dans la ligne d'échappement, de systèmes de post-traitement des gaz de plus en plus complexes, en particulier pour les moteurs en mélange pauvre.

Contrairement à un catalyseur d'oxydation classique, permettant d'éliminer le monoxyde de carbone et les hydrocarbures à brûler, de tels systèmes sont prévus pour réduire notamment les émissions de particules et d'oxyde d'azote et fonctionnent de manière discontinue ou alternative.

En effet, dans de tels systèmes, les polluants sont piégés et stockés en fonctionnement normal du moteur et sont traités périodiquement, lors de phases de régénération qui nécessitent un mode de combustion spécifique afin de garantir les niveaux de thermique et/ou de richesse en carburant nécessaires.

A cet effet, le débit d'injection de carburant dans les chambres de combustion des cylindres peut être réglé selon les besoins de façon à fonctionner selon un mode de combustion plus ou moins riche et il en résulte une variation de la température des gaz d'échappement ainsi que de la proportion d'oxydants et de réducteurs dans ces gaz.

Par ailleurs, dans le cas d'un moteur de véhicule, le débit et la température des gaz d'échappement dépendent également, à chaque instant, du régime du moteur commandé par le conducteur en fonction des conditions de circulation.

Le fonctionnement d'un système de post-traitement doit donc tenir compte de différents facteurs.

Par exemple, pour réduire les émissions d'oxydes d'azote $NO_x$ dans un mélange globalement oxydant tel que les gaz d'échappement d'un moteur, on dispose habituellement, dans le système d'épuration, un catalyseur comportant un moyen d'accumulation des oxydes d'azote dénommé "$NO_x$-Trap" qui est intégré dans la ligne d'échappement et dans lequel sont piégés les oxydes d'azote émis pendant le fonctionnement normal du moteur. Le fonctionnement d'un tel catalyseur d'accumulation d'oxydes d'azote est décrit en détail, par exemple, dans le document EP-A-0 580 389.

Un tel catalyseur est régénéré périodiquement en exploitant le moteur en régime riche pendant un certain temps afin de décomposer les nitrates en libérant du $NO_x$ qui est alors réduit en azote par les réducteurs tels que $H_2$, HC, et CO contenus dans les gaz d'échappement, de la façon décrite dans le document cité plus haut.

De même, pour éliminer les particules de suie présentes dans les gaz d'échappement, le système de post-traitement comporte, normalement, un filtre à particules, par exemple catalytique, dont la paroi intérieure est recouverte d'une couche d'un matériau imprégné de métaux précieux, appelée "Wash Coat", assurant une fonction d'oxydation destinée à diminuer la température de combustion des particules de suies.

Pour éviter le colmatage d'un tel filtre à particules par les suies, il est nécessaire de procéder périodiquement à une régénération qui consiste à brûler les suies en élevant la température des gaz d'échappement dans le filtre à particules, à une température de consigne de l'ordre de 600 °C. Cette élévation de température peut être obtenue en dégradant le rendement moteur par des moyens appropriés d'aide à la régénération.

A cet effet, on peut aussi placer un injecteur additionnel à l'échappement, en amont du catalyseur afin de faire varier les proportions d'oxydants et de réducteurs. FR2853006 décrit un procédé de contrôle de la température d'un système de post-traitement des gaz dans un circuit d'échappement capable de piéger et stocker un polluant. L'organe de post-traitement est soumis périodiquement à des phases de régénération par élévation de température à une valeur de consigne, le temps de régénération étant divisé en une succession de périodes fractionnées alternativement en mode plus chaud et moins chaud, la durée de chaque période étant pilotée afin de maintenir la température des gaz de sortie de l'organe de post-traitement à une valeur de consigne. En outre, pour optimiser le traitement de l'ensemble des polluants, il faut gérer au mieux les phases de stockage et de régénération des organes de post-traitement en maîtrisant, autant que possible, la puissance thermique développée au sein de ces pièges afin d'optimiser la combustion des suies dans le cas du filtre à particules et le chargement, la réduction des oxydes d'azote et la désorption du soufre dans le cas du piège à $NO_x$ ou $NO_x$-Trap. En effet, ces réactions de combustion, d'oxydation, d'adsorption ou de réduction sont directement dépendantes de la température du support de ces pièges et des gaz qui les traversent.

Cependant, il faut aussi éviter d'éventuels pics de température risquant de détériorer le catalyseur, en contrôlant la puissance thermique en sortie du premier système de post-traitement qui est généralement du type catalyseur d'oxydation ou $NO_x$-Trap, de façon à rester dans une fenêtre de température proche de la température maximale d'utilisation.

De façon connue, un tel contrôle peut être réalisé à partir d'une mesure de la température interne du catalyseur, au moyen de capteurs placés à l'intérieur de celui-ci. Cependant, l'implantation d'un capteur au sein du catalyseur est difficile et présente des risques pour l'intégrité du monolithe constituant le catalyseur. Il est donc préférable de placer le capteur de température en aval du catalyseur, la gestion de la thermique en sortie du premier système de post-traitement étant assurée, dans un système de contrôle dit "par retour d'état" à partir d'une mesure de la température des gaz en sortie de ce système. Toutefois, la réponse d'un tel système est lente et très retardée et, en outre, très sensible aux changements d'inertie du monolithe occasionnés par des variations de la température des gaz à l'entrée du système de post-traitement et/ou des variations de leur débit. De ce fait, les caractéristiques temporelles de la réponse d'un tel procédé à l'échelon de commande limitent les performances d'un contrôle par retour d'état en termes de suivi de consignes et il peut être impossible d'éviter des dépassements de la température maximale admissible. De plus, en raison de la sensibilité du procédé aux changements de conditions de fonctionnement, il sera très difficile de réaliser un contrôle assez stable sur l'ensemble du champ de fonctionnement du moteur sans déterminer ses paramètres pour chacune des conditions de fonctionnement, ce qui est inadmissible en termes d'espace-mémoire dédié à cette fonction.

Pour éviter ces inconvénients, l'invention a pour objet un nouveau procédé de contrôle permettant une régulation de la thermique interne du catalyseur sans dépendre des conditions d'observation de l'état du système pour l'élaboration de la commande adéquate.

En particulier, l'invention permet de s'adapter de façon optimale aux conditions particulières de piégeage et d'élimination des différents polluants qui peuvent être contenus dans les gaz d'échappement.

D'une façon générale, l'invention concerne donc un procédé de contrôle de la température des gaz dans un circuit d'échappement d'un moteur thermique alimenté en un mélange dont la proportion en carburant peut être réglée selon un mode de combustion plus ou moins riche, ledit circuit d'échappement comportant au moins un organe de post-traitement dans lequel est piégé et stocké au moins un polluant contenu dans les gaz d'échappement, cet organe de post-traitement étant soumis périodiquement à des phases de régénération par élévation de la température des gaz d'échappement à une température de consigne, pendant un temps de régénération permettant l'élimination des polluants stockés.

Conformément à l'invention, le temps de chaque phase de régénération est divisé en une succession de périodes fractionnées de réglage du moteur, alternativement en deux modes de combustion avec des richesses différentes, respectivement un mode plus chaud pour lesquels la puissance thermique entrante apportée par les gaz est supérieure à une puissance de consigne nécessaire pour l'obtention de la température de consigne et un mode moins chaud pour lequel la puissance thermique entrante est inférieure à la puissance de consigne, la durée de chaque période fractionnée étant pilotée de façon que le surplus d'énergie apportée dans une période en mode plus chaud, soit compensé par le défaut d'énergie dans la période suivante en mode moins chaud et inversement, afin de maintenir la température des gaz, à la sortie de l'organe de post-traitement, au voisinage d'une température moyenne correspondant à la température de consigne.

De façon particulièrement avantageuse, la durée de chaque période fractionnée en mode plus chaud ou en mode moins chaud est déterminée de façon que le surplus ou le défaut d'énergie apporté par les gaz pendant ladite période, par rapport à la puissance de consigne, ne dépasse pas une limite donnée.

A cet effet, les proportions de carburant en mode plus chaud et en mode moins chaud et les durées respectives des périodes fractionnées, sont déterminées de façon que l'amplitude de variation de la température des gaz, dans l'organe de post-traitement, par rapport à la température de consigne et/ou la différence entre la puissance entrant dans l'organe de post-traitement et la puissance de consigne, ne dépassent pas une même limite, par excès en mode plus chaud et par défaut en mode plus froid.

Selon une autre caractéristique préférentielle, les durées des périodes fractionnées, respectivement en mode plus chaud et en mode moins chaud, sont déterminés de façon que l'énergie apportée dans chaque période, correspondant à la différence entre la puissance thermique $W_e$ entrant dans l'organe de post-traitement et la puissance de consigne $W_c$, ne dépasse pas, par excès ou par défaut, une même limite $E_{max}$ donnée par l'équation :

$$E_{max} = \alpha * 2 * (T_{max} - T_s) * M * C_m$$

dans laquelle :

- $T_{max}$ est la température qui ne doit pas être dépassée à l'intérieur de l'organe de post-traitement ;
- $T_s$ est la température de consigne prévue en phase de régénération ;
- M est la masse de l'organe de post-traitement ;
- $C_m$ est la capacité calorifique de l'organe de post-traitement ;
- $\alpha$ est la proportion, par rapport à sa longueur totale, de l'organe de post-traitement entre la zone d'entrée des gaz d'échappement et la zone où la température atteint son niveau maximal $T_{max}$.

Selon une autre caractéristique particulièrement avantageuse, le surplus ou le défaut d'énergie apporté par les gaz pendant une période est calculé, à chaque instant, par intégration en fonction du temps de la différence entre la puissance de consigne et la puissance entrant dans l'organe de post-traitement.

Selon une caractéristique préférentielle, la puissance de consigne $W_c$ nécessaire à l'obtention de la température de consigne Ts à la sortie de l'organe de post-traitement est égale à la somme de la puissance théorique $W_s$ à la sortie de l'organe de post-traitement et des pertes $W_p$, ladite puissance théorique $W_s$ étant donné par la formule :

$$W_s = T_s*Q_{ech}*C_p$$

dans laquelle Ts est la température de consigne nécessaire à la régénération, $Q_{ech}$ le débit des gaz d'échappement qui peut varier selon le régime du moteur et $C_p$ la capacité calorifique des gaz d'échappement dépendant de leur composition qui peut varier selon le mode de combustion.

De même, la puissance thermique $W_e$ entrant dans l'organe de post-traitement à chaque instant, peut être donné par la formule

$$W_e = T_e*Q_{ech}*C_p+W_{exo}$$

dans laquelle Te est la température des gaz mesurée à chaque instant en amont de l'organe de post-traitement, $Q_{ech}$ le débit des gaz d'échappement, $C_p$ leur capacité calorifique et $W_{exo}$ la puissance thermique apportée par les masses oxydantes et réductrices qui réagissent dans l'organe de post-traitement.

D'autres caractéristiques avantageuses de l'invention apparaîtront dans la description suivante d'un mode de réalisation particulier, donné à titre d'exemples et représenté sur les dessins annexés.

La figure 1 est un schéma général des circuits d'admission et d'échappement d'une chambre de combustion d'un moteur à combustion interne.

La figure 2 est un schéma d'un circuit d'échappement équipé d'un système de post-traitement des gaz d'échappement.

La figure 3 est un diagramme montrant un exemple de variation, au cours d'une phase de régénération, du débit des gaz d'échappement selon le régime du moteur et la variation correspondante de la puissance de consigne nécessaire et de la puissance thermique entrante, selon le mode de combustion.

La figure 4 est un diagramme général illustrant le procédé selon l'invention.

La figure 5 est un schéma d'un système de contrôle de température pour la mise en oeuvre du procédé.

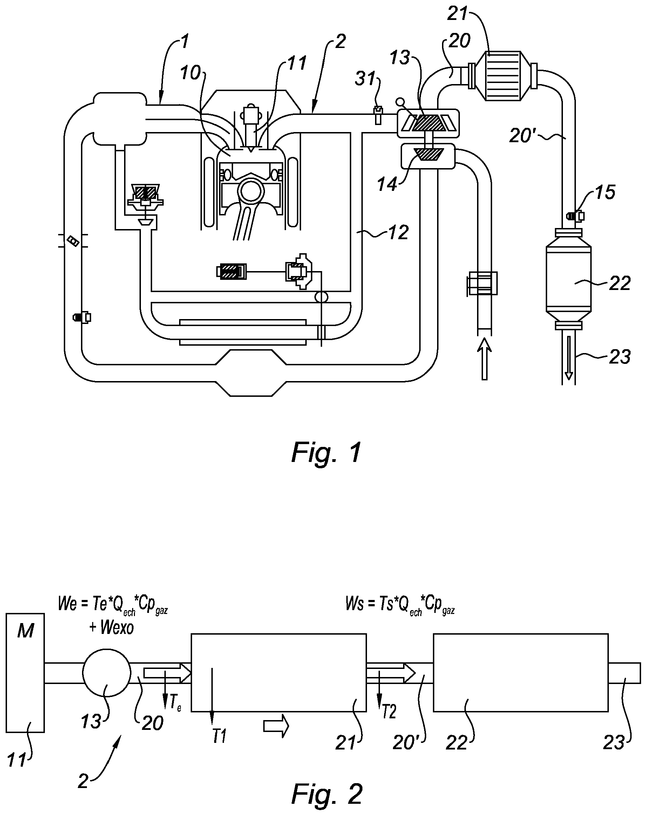

Sur la figure 1, on a représenté schématiquement une chambre de combustion 10 d'un moteur alimenté en carburant par un injecteur 11 et reliée à des circuits 1 d'admission d'air et 2 d'échappement des gaz de combustion.

De façon classique, le circuit d'admission d'air 1 comporte un compresseur 14 entrainé par une turbine 13 placée sur le circuit d'échappement 2 qui peut, en outre, alimenter un circuit 12 de recyclage d'une partie des gaz dans le moteur.

Comme le montre la figure 1, les différents circuits peuvent comporter divers organes annexes tels que des échangeurs pour le chauffage de l'air ou le refroidissement des gaz recyclés, des électrovannes de réglage des débits, des capteurs etc...

Toutes ces dispositions bien connues peuvent faire l'objet de multiples variantes et ne nécessitent pas une description détaillée.

A la sortie de la turbine, les gaz d'échappement sont renvoyés à l'atmosphère par un circuit de sortie 20 qui, pour réduire la pollution, comporte au moins un organe de post-traitement 21.

Cet organe de post-traitement, habituellement du type $NO_x$-Trap, permet de retenir et de stocker les oxydes d'azote contenus dans les gaz d'échappement et est associé, habituellement, à un filtre à particules 22 qui retient, sous forme de suies, les particules contenues dans les gaz.

Ainsi, comme le montre schématiquement la figure 2, le circuit d'échappement 2 d'un moteur à combustion interne 10 comporte habituellement, en aval de la turbine 13, un premier organe de post-traitement 21 du type catalyseur d'oxydation et un second organe 22 tel qu'un filtre à particules, les gaz ainsi dépollués étant rejetés à l'atmosphère par un circuit d'évacuation 23. Souvent, un injecteur additionnel est placé dans le circuit d'échappement 2.

De façon classique, les polluants accumulés, en fonctionnement normal, dans l'organe de post-traitement 21, sont éliminés dans des phases de régénération, généralement en élevant la température des gaz avec réglage du moteur, respectivement en mélange riche pour la désorption du soufre dans l'organe de post-traitement 21 et en mélange pauvre pour la combustion des suies dans le filtre à particules 22. Pour cela, l'injecteur 11 ou l'injecteur additionnel placé à l'échappement est piloté, habituellement, par une unité de contrôle recevant les informations transmises par divers capteurs et associée à un modèle qui commande périodiquement le passage en phase de régénération et le maintien de la température au niveau de consigne souhaité.

Cependant, la température $T_e$ et le débit $Q_{ech}$ des gaz d'échappement mesurés, par exemple, par des capteurs 31 placés en amont ou en aval de la turbine 13, varient à chaque instant en fonction du régime du moteur commandé par le conducteur.

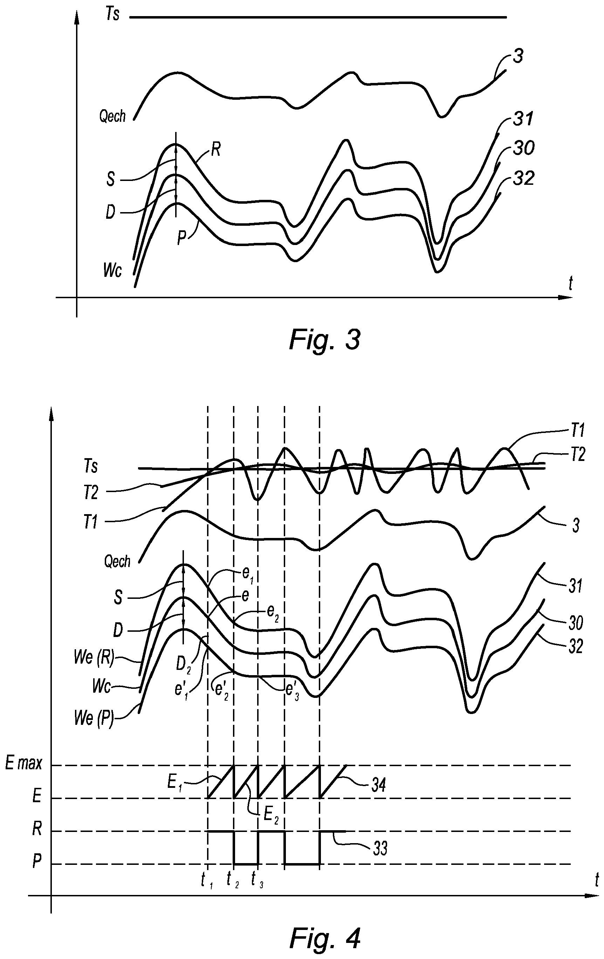

Par exemple, sur le diagramme de la figure 3, la courbe 3 montre l'évolution possible, au cours du temps, du débit des gaz d'échappement qui varie en fonction du régime demandé au moteur, c'est-à-dire de la position de la pédale d'accélération et des rapports engagés sur la boîte de vitesses pendant la période considérée.

On connaît également à chaque instant, par mesure, estimation ou modélisation, la composition des gaz d'échappement et l'on peut donc en déduire leur capacité calorifique $C_p$ à l'instant considéré.

Après avoir traversé le catalyseur 21, les gaz d'échappement qui sortent par la conduite 20' ont le même débit $Q_{ech}$ et leur température $T_s$, qui peut être mesurée par un capteur 15, correspond à la température interne du catalyseur 21. Le problème de l'invention est donc de maintenir cette température $T_s$, pendant toute la durée d'une phase de régénération, au voisinage d'une température de consigne pour laquelle le fonctionnement du catalyseur est optimal mais qui ne doit pas être dépassée pour éviter une détérioration du catalyseur.

D'une façon générale, la puissance thermique, exprimée en joule par seconde, des gaz sortant du catalyseur à une température $T_s$ et avec un débit $Q_{ech}$ est égale à :

$$W_s = T_s * Q_{ech} * C_p \qquad\qquad (1)$$

$C_p$ étant la capacité calorifique des gaz qui dépend de leur composition, c'est-à-dire du mode de combustion, plus ou moins riche, imposé au moteur à cet instant.

Le principe de la gestion thermique consiste à apporter dans le catalyseur 21 une puissance thermique entrante moyenne sensiblement égale à cette puissance thermique sortante, c'est-à-dire à la puissance évacuée à la température de consigne désirée.

Cette puissance thermique entrante est constituée, d'une part, de la puissance thermique apportée directement par la chaleur des gaz en raison de leur température Te et de leur débit $Q_{ech}$ et, d'autre part, de la puissance potentielle apportée indirectement par la capacité de réaction exothermique des masses d'oxygène ou de réducteurs présents dans les gaz d'échappement et qui réagissent partiellement ou totalement dans le catalyseur. Cette réaction exothermique fournit, en effet, un complément d'énergie $W_{exo}$ qui, dans le catalyseur, s'ajoute à la puissance de chauffage direct des gaz pour élever leur température.

La puissance entrante $W_e$, exprimée en J/s, peut donc s'écrire :

$$W_e = T_e * Q_{ech} * C_p + W_{exo} \qquad\qquad (2)$$

Cette puissance thermique entrante peut donc être calculée à partir d'une mesure, d'une estimation ou de la modélisation de la température $T_e$ et du débit $Q_{ech}$ des gaz dans la conduite 20, à l'entrée du catalyseur 21, ainsi que de leur composition, en particulier des émissions d'oxygène ou de réducteurs, qui permettent de déterminer leur capacité calorifique $C_p$ et la puissance potentielle de réaction exothermique $W_{exo}$.

Cependant, ces paramètres sont liés, d'une part au régime de fonctionnement du moteur qui varie à chaque instant selon les ordres du conducteur et, d'autre part, du mode de combustion, c'est-à-dire du degré de richesse en carburant du mélange. Ainsi, un moteur Diesel fonctionne, normalement, en mélange pauvre, mais, comme on l'a vu plus haut, on le fait passer périodiquement en mode plus riche, et plus chaud, dans les phases de régénération des organes de post-traitement qui nécessitent une composition des gaz riche et une température plus élevée des gaz.

La puissance thermique entrant dans le catalyseur dépend donc du mode de combustion qui détermine la température $T_e$. Cependant, comme elle est liée au débit des gaz, elle varie de façon analogue à ce paramètre en fonction du régime du moteur ordonné par le conducteur.

Sur le diagramme de la figure 3, la courbe 3 donne un exemple d'évolution possible, sur une période de temps, du débit des gaz d'échappement $Q_{ech}$ pour l'obtention d'une température de sortie $T_s$, ce débit variant d'une certaine façon selon le régime demandé au moteur.

La puissance thermique qui doit être apportée par les gaz à cette température pour l'obtention d'une température de sortie $T_s$ sensiblement constante, évolue de la même façon que le débit des gaz en fonction du régime du moteur, mais elle dépend aussi de la richesse du mélange selon le mode de combustion choisi, ainsi que des pertes.

La courbe 30 indique l'évolution de la puissance de consigne $W_c$ théoriquement nécessaire compte tenu des pertes, pour l'obtention de la température de consigne à la sortie du catalyseur.

Il est, cependant, difficile de régler le fonctionnement du moteur pendant le temps de régénération afin d'apporter, à chaque instant, la puissance nécessaire à l'obtention et au maintien de la température de consigne.

Pour résoudre ce problème, l'idée de l'invention consiste à contrôler une alternance de phases riches et pauvres en les associant, de façon à apporter, soit un excès d'énergie grâce à un mode de combustion (R) plus riche et, par conséquent, plus chaud que nécessaire, soit un défaut d'énergie par un mode de combustion plus pauvre (P) et, par conséquent, moins chaud que nécessaire, cet excès et ce défaut d'énergie pouvant se compenser de façon à maintenir la température, dans le catalyseur, à une valeur moyenne correspondant à la température de consigne.

Sur le diagramme de la figure 3, par exemple, on a représenté l'évolution au cours du temps de la puissance thermique apportée par les gaz à l'entrée du catalyseur, soit en mode chaud sur la courbe 31, soit en mode froid sur la courbe 32.

Etant donné que la puissance thermique et potentiellement exothermique entrante We des gaz est liée au mode de combustion plus ou moins chaud mais que le débit dépend seulement du régime demandé au moteur, les deux courbes 31, 32 sont sensiblement parallèles et décalées de part et d'autre de la courbe 30 correspondant à la puissance théoriquement nécessaire $W_c$ pour obtenir et maintenir la température de consigne.

A chaque instant, par conséquent, le changement de mode permet d'obtenir soit, en mode chaud (R), un surplus d'énergie S par rapport à la puissance théoriquement nécessaire, soit, en mode froid (P), un défaut d'énergie D.

Selon l'invention, en contrôlant les durées respectives des périodes de fonctionnement dans chacun des deux modes, il sera possible de compenser le surplus d'énergie apporté au cours d'une période en mode chaud, par le défaut d'énergie apporté au cours de la période suivante en mode froid, de façon à maintenir une température moyenne optimale.

La figure 4 est un diagramme général illustrant les étapes successives d'un tel procédé.

A la partie supérieure de ce diagramme, la courbe 3 indique, en ordonnée, l'évolution du débit des gaz d'échappement qui peut varier en fonction des ordres donnés par le conducteur du véhicule pendant un temps de régénération indiqué en abscisse et dont la durée, selon le procédé de régénération, peut aller, par exemple, de quelques dizaines de secondes à plusieurs minutes.

La courbe 30 indique, comme sur la figure 3, la puissance théorique $W_c$ qui devrait être apportée par les gaz pour le maintien, à la sortie du catalyseur, d'une température constante Ts.

Comme indiqué plus haut, cette température étant constante, la puissance de consigne $W_c$ varie de façon analogue au débit.

Selon l'invention, l'injection de carburant va être modifiée alternativement pour passer d'un mode de combustion plus riche que nécessaire à un mode de combustion moins riche.

Les puissances thermiques qui en résultent à l'entrée du catalyseur sont indiquées, comme sur la figure 3, par la courbe 31 pour le mode plus chaud (R) et par la courbe 32 pour le mode moins chaud (P).

L'injection de carburant peut être réglée dans chacun des deux modes, respectivement chaud et froid, de façon que, à un instant déterminé, et selon le mode de combustion choisi et le régime du moteur, le surplus de puissance S apporté en mode chaud par rapport à la puissance $W_c$ théoriquement nécessaire, soit du même ordre, en valeur absolue, que le défaut de puissance D résultant au même instant, du fonctionnement en mode froid. De ce fait, à un instant $t_1$, les deux points $e_1$ sur la courbe 31 et $e'_1$, sur la courbe 32 correspondant, respectivement, au mode chaud (R) et au mode froid (P), sont symétriques par rapport au point e de la courbe 30 correspondant à la puissance de consigne théorique $W_c$.

Selon l'invention, le temps de régénération est divisé en une succession de périodes fractionnées de fonctionnement, alternativement en mode chaud (R) et en mode froid (P) de la façon représentée en bas du diagramme par la ligne en créneaux 33.

Ainsi, le palier haut, entre les temps $t_1$ et $t_2$, correspond à une période en mode chaud pendant laquelle la puissance entrante suit la courbe 31 entre les points $e_1$ et $e_2$ et le palier bas, entre les instants $t_2$ et $t_3$, correspond à une période en mode froid pendant laquelle la puissance entrante We suit la courbe 32 entre les points $e'_2$ et $e'_3$.

L'énergie absorbée par le catalyseur au cours d'une période correspond à l'intégration, en fonction du temps, de la puissance apportée par les gaz. On peut ainsi déterminer, par intégration, l'excès ou le défaut d'énergie absorbée par le catalyseur et correspondant à l'excès S ou au défaut D de puissance apporté par les gaz au cours de cette période.

La ligne 34 indique la variation en valeur absolue, au cours de chaque période fractionnée, de cet excès ou défaut d'énergie par rapport à l'énergie E théoriquement nécessaire pour le maintien du catalyseur à une température constante $T_s$.

En haut du diagramme, la courbe $T_1$ indique les variations de la température des gaz à l'entrée du catalyseur 21 et la courbe $T_2$, les variations de la température à la sortie.

A partir de l'instant $t_1$, le moteur fonctionne en mode chaud et la température $T_1$ à l'entrée du catalyseur augmente progressivement.

De ce fait, la température $T_2$ des gaz augmente également progressivement à la sortie du catalyseur, avec un décalage dû à l'inertie thermique.

Pour un fonctionnement optimal du catalyseur, il convient de limiter l'amplitude de variation de sa température interne et, par conséquent, de l'énergie absorbée. On peut ainsi se fixer une valeur maximale $E_{max}$, en valeur absolue, de l'écart, par excès ou par défaut, de l'énergie absorbée par rapport à l'énergie constante E théoriquement nécessaire pour compenser les pertes, en maintenant la température de sortie $T_s$ à un niveau constant.

En mode chaud, l'énergie absorbée $E_1$ est supérieure à l'énergie nécessaire E et l'écart augmente progressivement, comme l'indique la ligne 34 sur le diagramme de la figure 4, entre les instants $t_1$ et $t_2$

A l'instant $t_2$, cet excès d'énergie $E_1$ apporté par les gaz atteint la valeur maximale $E_{max}$ et l'on fait alors basculer le moteur en mode froid, en suivant un palier bas de la ligne 33. Il en résulte un défaut d'énergie $E_2$ qui s'obtient par intégration du défaut de puissance $D_2$ et dont la valeur absolue augmente progressivement pour atteindre la même valeur maximale $E_{max}$ à l'instant $t_3$. Pendant la période $t_2$, $t_3$, la température $T_1$ à l'entrée du catalyseur diminue et il en résulte, avec retard, une diminution de la température $T_2$ à la sortie du catalyseur.

En limitant ainsi à la même valeur $E_{max}$ l'écart, par excès ou par défaut, entre l'énergie apportée et l'énergie théoriquement nécessaire et, par conséquent, l'amplitude de variation de $T_1$, il est possible d'amortir les variations de la température $T_2$ à la sortie du catalyseur 21 de façon que celle-ci reste au voisinage d'une température moyenne correspondant à la température de consigne $T_s$.

La durée de chaque période fractionnée $t_1$, $t_2$ en mode chaud (R) ou $t_2$, $t_3$ en mode froid (P) et ainsi de suite, est donc déterminée en commandant le changement de mode de combustion à l'instant où l'écart d'énergie atteint, par excès ou par défaut, la valeur limite $E_{max}$.

Selon l'invention, on va donc faire passer alternativement le moteur d'un mode de combustion dit « mode chaud », plus riche que ce qui est nécessaire à l'obtention de la puissance de consigne, à un mode plus pauvre, dit « mode froid », en pilotant la durée des périodes fractionnées de sorte que le surplus d'énergie apportée dans une période en mode « chaud » soit compensé par la perte d'énergie lors de la période suivante en mode « froid », le passage d'un mode à l'autre étant commandé lorsque le surplus ou le défaut d'énergie atteint une valeur maximale $E_{max}$ déterminée de façon à limiter l'amplitude de variation de la température à l'intérieur du monolithe constituant le catalyseur.

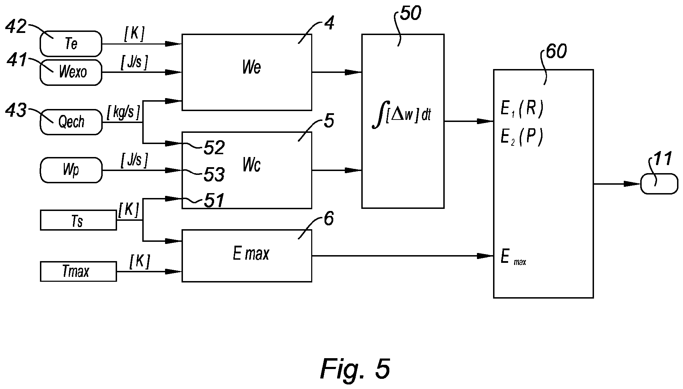

Pour cela, les moyens de réglage du mode de combustion du moteur c'est-à-dire, essentiellement, l'injection en carburant, peuvent avantageusement être pilotés par une unité de contrôle du type représenté, à titre d'exemple préférentiel, sur la figure 5.

Pour la mise en oeuvre du procédé, on réalise tout d'abord une mise au point des deux modes de combustion, respectivement riche et pauvre, en établissant une cartographie permettant d'estimer, à chaque instant, la puissance de réaction exothermique $W_{exo}$ qui sera apportée, dans chacun des deux modes, par les masses oxydantes et réductrices réagissant dans l'organe de post-traitement.

Cette puissance exothermique $W_{exo}$ est estimée par cet exotherme potentiel 41 qui applique un signal correspondant à une entrée d'un bloc 4 de calcul de la puissance entrante $W_e$. Ce bloc de calcul 4 reçoit, d'autre part, des signaux correspondant, respectivement, à la température Te et au débit $Q_{ech}$ des gaz à l'entrée du monolithe qui peuvent être mesurés par des capteurs 42, 43 ou bien estimés en fonction du régime du moteur.

Le potentiel énergétique du réglage moteur est ainsi mesuré et estimé par le bloc de calcul 4 en appliquant l'équation indiquée plus haut :

$$W_e = T_e * Q_{ech} * C_p + W_{exo} \qquad (2)$$

En connaissant la température de consigne $T_s$ qui doit être maintenue sensiblement constante à la sortie du premier catalyseur 21 et la puissance sortante correspondante $W_s$, un bloc de calcul 5 détermine la puissance de consigne $W_c$ nécessaire pour obtenir cette température Ts, à partir des informations affichées sur ses entrées 51, 52, 53 relatives, respectivement, à la température du consigne Ts, au débit $Q_{ech}$ des gaz mesuré ou estimé en amont du catalyseur 21 et à la perte d'énergie $W_p$ dans le catalyseur qui peut être estimée ou déterminée par modélisation.

Le bloc de calcul 5 détermine ainsi la puissance de consigne en appliquant l'équation :

$$W_c = W_s + W_p \qquad (3)$$

Comme indiqué plus haut, la puissance entrante $W_e$ dépend du mode de combustion, c'est-à-dire de la puissance de réaction exothermique $W_{exo}$ et peut varier au cours de la phase de régénération en fonction du régime du moteur, de la façon indiquée, par exemple, par les courbes 31 et 32 du diagramme de la figure 4, la puissance de consigne $W_c$ déterminée par le bloc de calcul 5, variant de la même façon en suivant la courbe 30.

A partir des valeurs variables $W_e$, $W_c$ ainsi déterminées par les blocs de calcul 4 et 5, un bloc de calcul 50 va en déduire, à chaque instant, la différence :

$$\Delta_w = W_c - W_e \qquad (4)$$

et, par intégration de la différence ainsi calculée, la valeur :

$$E = \int |\Delta w|\, dt \qquad\qquad (5)$$

de l'excès $E_1$ ou, selon le mode de combustion, du défaut d'énergie $E_2$ absorbée par le catalyseur jusqu'à l'instant considéré, par rapport à l'énergie nécessaire au maintien de la température de consigne.

Comme indiqué plus haut, les durées des périodes fractionnées $t_1$, $t_2$ en mode riche, $t_2$ $t_3$ en mode pauvre, $t_3$ $t_4$ en mode riche et ainsi de suite, sont déterminées en inversant le mode de combustion chaque fois que cet excès $E_1$ ou ce défaut d'énergie $E_2$ apportée au catalyseur atteint, en valeur absolue, la limite fixée $E_{max}$.

Cette valeur limite $E_{max}$ est déterminée par un bloc de calcul 6 en appliquant l'équation :

$$E_{max} = \alpha \,{}^{*}2{}^{*}(T_{max}-T_s){}^{*}M{}^{*}C_m \qquad\qquad (6)$$

dans laquelle :

- $T_{max}$ est une température maximale, affichée à l'entrée du bloc 6, qui ne doit pas être dépassée à l'intérieur de l'organe de post-traitement,
- $M$ est la masse totale du monolithe constituant le catalyseur ;
- $C_m$ est la capacité calorifique du monolithe ;
- $\alpha$ est la proportion, par rapport à sa longueur totale, du monolithe entre la zone d'entrée des gaz d'échappement et la zone ou la température atteint son niveau maximal $T_{max}$.

La valeur $E_{max}$ ainsi déterminée par le bloc de calcul 6 et la valeur de l'excès $E_1$ ou du défaut d'énergie $E_2$ déterminée par le bloc de calcul 50, sont affichées sur un comparateur 60 qui, lorsque la différence est nulle, donne aux moyens 11 d'injection de carburant l'ordre de passer d'un mode riche (R) à un mode pauvre (P) ou inversement.

De la sorte, comme indiqué à la partie haute du diagramme de la figure 4, la température $T_2$ à la sortie du catalyseur 21 peut être maintenue au voisinage d'une valeur moyenne qui correspond à la température de consigne $T_s$.

L'invention permet ainsi, en pilotant l'injection de carburant dans le moteur, de maintenir la température à l'intérieur du catalyseur à un niveau optimal aussi élevé que possible mais restant inférieur à une température $T_{max}$ déterminée à l'avance.

Il est ainsi possible de réaliser, dans des conditions optimales, la régénération du premier système de post-traitement 21, en particulier la désulfutation du catalyseur.

Cependant, dans la mesure où la température des gaz à la sortie du catalyseur 21 est maintenue sensiblement constante, il est possible également d'effectuer en même temps la régénération par combustion des suies d'un second système de post-traitement 22 placé en aval, en particulier un filtre à particules ou un système à 4 voies.

Il est à noter que l'alternance des périodes fractionnées permettra d'effectuer dans les meilleures conditions la régénération des systèmes de post-traitement qui se fait, de préférence, en mode riche dans la désulfatation et en mode pauvre pour la combustion des suies dans les filtres à particules.

L'invention ne se limite, cependant, pas au mode de réalisation qui vient d'être décrit à titre de simple exemple mais englobe toutes les variantes utilisant des moyens équivalents ainsi que d'autres applications mettant en oeuvre des moyens analogues pour la régénération des systèmes de post-traitement.

Ainsi, pour la régénération des systèmes classiques, on passera alternativement d'un mode riche à un mode pauvre mais, dans certains cas, il pourrait être intéressant de gérer le fractionnement à partir de deux modes pauvres distincts, respectivement plus chaud et plus froid, par exemple pour la régénération des suies dans un système de post-traitement du type filtre à particules ou système 4-voies placé en aval d'un premier système de type DOC, NOx-Trap ou 4-Voies.

De même, il serait possible, à partir de deux modes pauvres distincts, d'optimiser l'efficacité de traitement des oxydes d'azote sur un système SCR (Selectiv Catalytic Réduction) placé en aval d'un DOC.

## Revendications

1. Procédé de contrôle de la température d'un système (21, 22) de post-traitement des gaz dans un circuit (2) d'échappement d'un moteur thermique (10) alimenté en un mélange dont la proportion en carburant peut être réglée selon un mode de combustion plus ou moins riche, le circuit d'échappement (2) comportant au moins un organe de post-traitement (21) dans lequel est piégé et stocké au moins un polluant contenu dans les gaz d'échappement, ledit organe de post-traitement (21) étant soumis périodiquement à des phases de régénération par élévation de la température des gaz d'échappement à une température de consigne ($T_s$) pendant un temps de régénération permettant l'élimination des polluants stockés, le temps de chaque phase de régénération étant divisé en une succession de périodes fractionnées ($t_1$ $t_2$) ($t_2$ $t_3$)..., alternativement en deux modes respectivement un mode plus chaud (R) pour lequel la puissance thermique entrante ($W_c$) apportée par les gaz est supérieure à une puissance de consigne ($W_c$) nécessaire pour l'obtention de la température de consigne ($T_s$) et un mode moins chaud (P) pour lequel la puissance thermique entrante ($W_e$) est inférieure à la puissance de consigne ($W_c$), la durée de chaque période étant pilotée afin de maintenir la température (T2) des gaz à la sortie de l'organe de post-traitement au voisinage d'une température moyenne correspondant à la température de consigne ($T_s$) **caractérisé par** le fait que la durée de chaque période fractionnée ($t_1$, $t_2$) est déterminée en commandant le changement de mode à l'instant où la valeur absolue de l'excès ou du défaut d'énergie ($E_1$, $E_2$) atteint une même valeur limite ($E_{max}$), de façon que le surplus d'énergie (S) apporté dans une période ($t_1$ $t_2$) en mode plus chaud (R) soit compensé par le défaut d'énergie (D) dans la période suivante ($t_2$ $t_3$) en mode moins chaud (P), et inversement, la valeur absolue de l'excès ou du défaut d'énergie ($E_1$, $E_2$) étant calculée, à chaque instant, par intégration en fonction du temps de la différence entre la puissance de consigne ($W_c$) et la puissance ($W_e$) entrant dans l'organe de post-traitement (21).

2. **Procédé selon la revendication 1 dans lequel les modes plus chaud (R) et moins chaud (P) sont obtenus par une combustion avec des richesses différentes.**

3. Procédé selon la revendication **1, caractérisé par le fait que** la puissance thermique entrante (We) apportée par les gaz est réglée par injection de carburant en amont de l'organe de post-traitement, au moyen d'un injecteur additionnel à l'échappement.

4. Procédé selon **l'une des** revendications **précédentes, caractérisé par le fait que** la durée de chaque période fractionnée ($t_1$ $t_2$) en mode plus chaud ou ($t_2$ $t_3$) en mode moins chaud est déterminée de façon que le surplus ou le défaut de puissance thermique $\Delta_w$ apporté par les gaz pendant ladite période, par rapport à la puissance de consigne $W_c$, ne dépasse **pas** une limite donnée.

5. Procédé selon la revendication **4, caractérisé par le fait que** les proportions de carburant en mode plus chaud (R) et en mode moins chaud (P) et les durées respectives des périodes fractionnées sont déterminées de façon que l'amplitude de variation de la température des gaz, dans l'organe de post-traitement (21), par rapport à la température de consigne ($T_s$), ne dépasse pas une même limite, par excès en mode plus chaud (R) ou par défaut en mode moins chaud (P).

6. Procédé selon **l'une des** revendications **précédentes** , **caractérisé par le fait que** la durée de chaque période fractionnée en mode plus chaud (R) est déterminée de façon que la température maximale à l'intérieur de l'organe de post-traitement (21) ne dépasse pas une limite donnée.

7. Procédé selon l'une des revendications précédentes, **caractérisé par le fait que** les durées des périodes fractionnées, respectivement en mode plus chaud (R) et en mode moins chaud (P), sont déterminées de façon que l'énergie apportée dans chaque période et correspondant à la différence entre la puissance thermique $W_c$ entrant dans l'organe de post-traitement et la puissance de consigne $W_e$ ne dépasse pas, par excès ou par défaut, une même limite $E_{max}$ donnée par l'équation :

$$E_{max} = \alpha * 2 * (T_{max} - T_{cons}) * M * C_m \qquad (6)$$

dans laquelle :

    - $T_{max}$ est une température maximale qui ne doit pas être dépassée à l'intérieur de l'organe de post-traitement ;
    - M est la masse de l'organe de post-traitement ;
    - $C_m$ est la capacité calorifique de l'organe de post-traitement ;
    - $\alpha$ est la proportion, par rapport à sa longueur totale, de l'organe de post-traitement entre l'entrée de celui-ci et la zone où la température atteint son niveau maximal $T_{max}$.

8. Procédé selon l'une des revendications précédentes, **caractérisé par le fait que** la puissance de consigne $W_c$ nécessaire à l'obtention de la température de consigne Ts à la sortie de l'organe de post-traitement (21) est égale à la somme de la puissance théorique $W_s$ et des pertes $W_p$, ladite puissance théorique $W_s$ étant donnée par la formule :

$$W_s = T_s * Q_{ech} * C_p \qquad (1)$$

dans laquelle $T_s$ est la température de consigne nécessaire à la régénération, $Q_{ech}$ le débit des gaz d'échappement qui peut varier selon le régime du moteur et Cp la capacité calorifique des gaz d'échappement dépendant de leur composition qui peut varier selon le mode de combustion.

9. Procédé selon l'une des revendications précédentes, **caractérisé par le fait que** la puissance thermique $W_c$ entrant dans l'organe de post-traitement (21) à chaque instant est donnée par la formule :

$$W_c = T_e * Q_{ech} * C_p + W_{exo} \qquad (2)$$

dans laquelle Te est la température des gaz mesurée à chaque instant en amont de l'organe de post-traitement, $Q_{ech}$ le débit des gaz d'échappement, $C_p$ leur capacité calorifique et $W_{exo}$ la puissance thermique apportée par les masses oxydantes et réductrices qui réagissent dans l'organe de post-traitement (21).

## Patentansprüche

1. Verfahren zum Steuern der Temperatur eines Systems (21, 22) zum Nachbehandeln der Gase in einem Abgaskreis (2) eines mit einem Gemisch, dessen Kraftstoffanteil gemäß einem fetteren oder weniger fetten Verbrennungsmodus geregelt werden kann, versorgten Verbrennungsmotors (10), wobei der Abgaskreis (2) wenigstens ein Nachbehandlungsorgan (21) umfasst, in dem wenigstens ein in den Abgasen enthaltener Schadstoff eingefangen und gespeichert wird, wobei das Nachbehandlungsorgan (21) regelmäßig Regenerationsphasen durch Erhöhen der Temperatur der Abgase auf eine Solltemperatur ($T_s$) während einer Regenerationszeit zum Ermöglichen des Beseitigens der gespeicherten Schadstoffe unterzogen wird, wobei die Zeit von jeder Regenerationsphase in eine Abfolge von Teilperioden ($t_1$ $t_2$) ($t_2$ $t_3$) ... unterteilt wird, alternativ in zwei Modi mit jeweils einem wärmeren Modus (R), bei dem die von den Gasen zugeführte Eingangswärmeleistung ($W_e$) höher ist als eine zum Erzielen der Solltemperatur ($T_s$) erforderliche Sollleistung ($W_c$), und einem weniger warmen Modus (P), bei dem die Eingangswärmeleistung ($W_e$) niedriger ist als die Sollleistung ($W_c$), wobei die Dauer von jeder Periode gesteuert wird, um die Temperatur (T2) der Gase am Ausgang des Nachbehandlungsorgans in der Nähe einer mittleren Temperatur entsprechend der Solltemperatur ($T_s$) zu halten, **dadurch gekennzeichnet, dass** die Dauer von jeder Teilperiode ($t_1$, $t_2$) durch Befehlen der Modusänderung zum Zeitpunkt bestimmt wird, zu dem der Absolutwert des Energieüberschusses oder -mangels ($E_1$, $E_2$) einen gleichen Grenzwert ($E_{max}$) erreicht, so dass der in einer Periode ($t_1$ $t_2$) im wärmeren Modus (R) zugeführte Energieüberschuss (S) durch den Energiemangel (D) in der folgenden Periode ($t_2$ $t_3$) im weniger warmen Modus (P) kompensiert wird, und wobei umgekehrt der Absolutwert des Energieüberschusses oder -mangels ($E_1$, $E_2$) zu jedem Zeitpunkt durch Integration entsprechend der Zeit der Differenz zwischen der Sollleistung ($W_c$) und der in das Nachbehandlungsorgan (21) eintretenden Leistung ($W_e$) berechnet wird.

2. Verfahren nach Anspruch 1, wobei der wärmere Modus (R) und der weniger warme Modus (P) durch eine Verbrennung mit verschiedenen Gehalten erzielt werden.

3. Verfahren nach Anspruch 1, **dadurch gekennzeichnet, dass** die von den Gasen zugeführte Eingangswärmeleistung ($W_e$) durch Einspritzen von Kraftstoff stromaufwärts vom Nachbehandlungsorgan mit einer zusätzlichen Einspritzdüse am Auspuff geregelt wird.

4. Verfahren nach einem der vorhergehenden Ansprüche, **dadurch gekennzeichnet, dass** die Dauer von jeder Teilperiode ($t_1$ $t_2$) im wärmeren Modus oder ($t_2$ $t_3$) im weniger warmen Modus so bestimmt wird, dass der Überschuss oder der Mangel an von den Gasen zugeführter Wärmeleistung $\Delta_w$ im Verhältnis zur Sollleistung $W_c$ eine vorgegebene Grenze nicht überschreitet.

5. Verfahren nach Anspruch 4, **dadurch gekennzeichnet, dass** die Kraftstoffanteile im wärmeren Modus (R) und im weniger warmen Modus (P) und die jeweilige Dauer der Teilperioden so bestimmt werden, dass die Variationsamplitude der Temperatur der Gase im Nachbehandlungsorgan (21) im Verhältnis zur Solltemperatur ($T_s$) eine gleiche

Grenze durch Überschuss im wärmeren Modus (R) oder durch Mangel im weniger warmen Modus (P) nicht überschreitet.

6. Verfahren nach einem der vorhergehenden Ansprüche, **dadurch gekennzeichnet, dass** die Dauer von jeder Teilperiode im wärmeren Modus (R) so bestimmt wird, dass die Höchsttemperatur im Nachbehandlungsorgan (21) eine vorgegebene Grenze nicht überschreitet.

7. Verfahren nach einem der vorhergehenden Ansprüche, **dadurch gekennzeichnet, dass** die Dauer der Teilperioden jeweils im wärmeren Modus (R) und im weniger warmen Modus (P) so bestimmt wird, dass die in jeder Periode zugeführte und der Differenz zwischen der in das Nachbehandlungsorgan eintretenden Wärmeleistung $W_e$ und der Sollleistung $W_c$ entsprechende Energie durch Überschuss oder durch Mangel eine gleiche Grenze $E_{max}$ gemäß der folgenden Formel nicht überschreitet:

$$E_{max} = \alpha * 2 * (T_{max} - T_{cons}) * M * C_m \qquad (6),$$

dabei ist:

- $T_{max}$ eine Höchsttemperatur, die im Nachbehandlungsorgan nicht überschritten werden darf;
- M die Masse des Nachbehandlungsorgans;
- $C_m$ die Wärmekapazität des Nachbehandlungsorgans;
- $\alpha$ der Anteil, im Verhältnis zu seiner Gesamtlänge, des Nachbehandlungsorgans zwischen dem Eingang von diesem und der Zone, in der die Temperatur ihr höchstes Niveau $T_{max}$ erreicht.

8. Verfahren nach einem der vorhergehenden Ansprüche, **dadurch gekennzeichnet, dass** die zum Erzielen der Solltemperatur $T_s$ am Ausgang des Nachbehandlungsorgans (21) erforderliche Sollleistung $W_c$ der Summe der theoretischen Leistung $W_s$ und ihrer Verluste $W_p$ entspricht, wobei die theoretische Leistung $W_s$ der folgenden Formel entspricht:

$$W_s = T_s * Q_{ech} * C_p \qquad (1),$$

dabei ist $T_s$ die zur Regeneration erforderliche Solltemperatur, $Q_{ech}$ die Durchflussmenge der Abgase, die je nach Motordrehzahl variieren kann, und $C_p$ die Wärmekapazität der Abgase entsprechend ihrer Zusammensetzung, die je nach Verbrennungsmodus variieren kann.

9. Verfahren nach einem der vorhergehenden Ansprüche, **dadurch gekennzeichnet, dass** die in das Nachbehandlungsorgan (21) zum jeweiligen Zeitpunkt eintretende Wärmeleistung $W_e$ der folgenden Formel entspricht:

$$W_e = T_e * Q_{ech} * C_p + W_{exo} \qquad (2),$$

dabei ist $T_e$ die zum jeweiligen Zeitpunkt stromaufwärts vom Nachbehandlungsorgan gemessene Temperatur der Gase, $Q_{ech}$ die Abgas-Durchflussmenge, $C_p$ ihre Wärmekapazität und $W_{exo}$ die von den oxidierenden und reduzierenden Massen, die im Nachbehandlungsorgan (21) reagieren, zugeführte Wärmeleistung.

**Claims**

1. Method of controlling the temperature of a system (21, 22) for the post-treatment of gases in an exhaust circuit (2) of a combustion engine (10) supplied with a mixture of which the proportion of fuel can be set according to a richer or less rich combustion mode, the exhaust circuit (2) comprising at least one post-treatment member (21) in which at least one pollutant contained in the exhaust gases is trapped and stored, said post-treatment member (21) being periodically subjected to regeneration phases by raising the temperature of the exhaust gases to a setpoint temperature ($T_s$) for a regeneration time to allow the stored pollutants to be eliminated, the time of each regeneration phase being divided into a succession of fractionated periods ($t_1$, $t_2$) ($t_2$, $t_3$) ... alternately, in two modes, these respectively being a hotter mode (R) for which the incoming thermal power ($W_e$) provided by the gases is greater than a setpoint power ($W_c$) needed to obtain the setpoint temperature ($T_s$), and a less-hot mode (P) for which the incoming thermal power ($W_e$) is less than the setpoint power ($W_c$), the duration of each period being managed in such a way as to keep the temperature ($T_2$) of the gases leaving the post-treatment member around a mean temperature corresponding to the setpoint temperature ($T_s$) , **characterized in that** the duration of each fractionated period ($t_1$, $t_2$) is determined by commanding a change in mode at the instant that the absolute value of the energy excess or deficit ($E_1$, $E_2$) reaches a limit value ($E_{max}$), in such a way that the energy surplus (S) provided in a period ($t_1$, $t_2$) in hotter mode (R) is compensated for by the energy deficit (D) in the next period ($t_2$, $t_3$) in less-hot mode (P), and vice versa, the absolute value of the energy excess or deficit ($E_1$, $E_2$) being calculated, at each instant, by integrating as a function of time the difference between the setpoint power ($W_e$) and the power ($W_e$) entering the post-treatment member (21).

2.  Method according to Claim 1, in which the hotter modes (R) and less-hot modes (P) are obtained by a combustion with different richnesses.

3.  Method according to Claim 1, **characterized in that** the incoming thermal power ($W_e$) provided by the gases is set by injecting fuel upstream of the post-treatment member, by means of an additional injector in the exhaust.

4.  Method according to one of the preceding claims, **characterized in that** the duration of each fractionated period ($t_1$, $t_2$) in hotter mode or ($t_2$, $t_3$) in less-hot mode is determined in such a way that the thermal power surplus or deficit $\Delta_w$ provided by the gases during said period, by comparison with the setpoint power $W_c$, does not exceed a given limit.

5.  Method according to Claim 4, **characterized in that** the proportions of fuel in the hotter mode (R) and in the less-hot mode (P) and the respective durations of the fractionated periods are determined in such a way that the amplitude of the variation in the temperature of the gases in the post-treatment member (21), by comparison with the setpoint temperature ($T_s$), does not exceed one and the same limit, in terms of an excess in the hotter mode (R) or in terms of a deficit in the less-hot mode (P).

6.  Method according to one of the preceding claims, **characterized in that** the duration of each fractionated period in the hotter mode (R) is determined in such a way that the maximum temperature inside the post-treatment member (21) does not exceed a given limit.

7.  Method according to one of the preceding claims, **characterized in that** the duration of the fractionated periods, in the hotter mode (R) and in the less-hot mode (P), respectively, are determined in such a way that the energy supplied in each period and which corresponds to the difference between the thermal power $W_e$ entering the post-treatment member and the setpoint power $W_c$ does not, in terms of an excess or in terms of a deficit, exceed one and the same limit $E_{max}$ given by the equation:

$$E_{max} \;=\; \alpha \;\times\; 2 \;\times (T_{max} - T_{cons}) \times\; M \;\times\; C_m \qquad (6)$$

in which:

   - $T_{max}$ is a maximum temperature that must not be exceeded inside the post-treatment member;
   - M is the mass of the post-treatment member;
   - $C_m$ is the heat capacity of the post-treatment member;
   - $\alpha$ is the proportion, with respect to its total length, of the post-treatment member between the inlet thereto and the zone in which the temperature reaches its maximum level $T_{max}$.

8.  Method according to one of the preceding claims, **characterized in that** the setpoint power $W_c$ needed to obtain the setpoint temperature $T_s$ at the outlet of the post-treatment member (21) is equal to the sum of the theoretical power $W_s$ and of the losses $W_p$, said theoretical power $W_s$ being given by the formula:

$$W_s \;=\; T_s \;\times\; Q_{exh} \;\times\; C_p \qquad (1)$$

in which $T_s$ is the setpoint temperature needed for regeneration, $Q_{exh}$ is the flow rate of the exhaust gases which may vary according to engine speed, and $C_p$ is the heat capacity of the exhaust gases which is dependent on their composition and which may vary according to the combustion mode.

9. Method according to one of the preceding claims, **characterized in that** the thermal power $W_e$ entering the post-treatment member (21) at each instant is given by the formula:

$$W_e = T_e \times Q_{exh} \times C_p + W_{exo} \qquad (2)$$

in which $T_e$ is the temperature of the gases as measured at each instant upstream of the post-treatment member, $Q_{exh}$ is the flow rate of the exhaust gases, $C_p$ is their heat capacity and $W_{exo}$ is the thermal power provided by the oxidizing and reducing masses reacting in the post-treatment member (21).

**Fig. 1**

$We = Te * Q_{ech} * Cp_{gaz}$
$+ Wexo$

$Ws = Ts * Q_{ech} * Cp_{gaz}$

**Fig. 2**

Fig. 3

Fig. 4

Fig. 5

**EP 2 106 498 B1**

## RÉFÉRENCES CITÉES DANS LA DESCRIPTION

**Documents brevets cités dans la description**

- EP 0580389 A
- FR 2853006